# EUROPEAN PATENT SPECIFICATION

(11) **EP 2 723 543 B1**
(45) Date of publication and mention of the grant of the patent: **08.11.2017**
(21) Application number: 12767131.1
(22) Date of filing: 11.05.2012
(51) Int. Cl.: B28B 3/12, C04B 40/00, C04B 28/04

(54) **METHOD FOR PRODUCING THIN CEMENT-BASED PANELS HAVING HIGH STRENGTH, DURABILITY AND PRODUCTION RATE**
VERFAHREN ZUR IN HOHER PRODUKTIONSFREQUENZ ERFOLGENDEN HERSTELLUNG DÜNNER ZEMENTPLATTEN VON HOHER FESTIGKEIT UND LANGER LEBENSDAUER
PROCÉDÉ POUR PRODUIRE DES PANNEAUX MINCES À BASE DE CIMENT AYANT UNE RÉSISTANCE ÉLEVÉE, UNE DURABILITÉ ÉLEVÉE ET UN TAUX DE PRODUCTION ÉLEVÉ

(30) Priority: 21.06.2011 TR 201106066
(43) Date of publication of application: 30.04.2014
(73) Proprietor: Ticem Ileri Yapi Teknolojileri Sanayi Ticaret Danismanlik Limited Sirketi, Istanbul (TR); Pekmezci, Bekir Y., 34460 Istanbul (TR)
(72) Inventor: PEKMEZC , Bekir Y., 34460 Istanbul (TR)
(74) Representative: Atalay, Baris
(86) International application number: PCT/TR2012/000073
(87) International publication number: WO 2012/177228

(56) References cited:
- FR-A- 1 425 619
- JP-A- 2 016 005
- JP-A- 2 041 206
- JP-A- 6 134 724
- US-A- 4 115 501
- US-A- 5 779 957

## Description

### Field of Invention

This invention relates to a method for producing two dimensions of a three-dimensional cement-based product substantially larger than its third dimension in the form of a panel, i.e. for providing a panel with a very thin structure.

### Prior Art

Cement-based materials are generally considered to be as inexpensive building materials. Cement-based materials typically have a low tensile strength and low impact strength. A low tensile strength and low impact strength are not problematic in terms of many applications. When, however, it is desired to produce materials with a very thin cross-section, this becomes unfeasible based on the lower tensile strength. In order to overcome this, fibers of different sorts are introduced into cement-based materials. Fibers incorporated into cement-based materials both improve the mechanical performance and enhance the durability of the materials.

In the past, the most common one among these products was the asbestos fiber-reinforced cementitous panels. The basic reasons for the widespread preference of asbestos in cementitous panels may be listed as its superior dispersion capacity, form stability, water-retaining capacity and its heat resistance. One of the features of the asbestos products rendering them preferable was their superior nailing and cutting property. However, after it was documented that asbestos is carcinogenic, the production of products manufactured using this fiber was discontinued and the relevant producers headed for alternative products. Thus, it was started to use synthetic fibers in place of asbestos fibers in these alternative products.

Another type of fibrous cementitous panels is the wood particleboards or panels. The swift and economical production of wood particleboards made these preferable, but many problems, such as cracking, breaking, etc. have been encountered when these products were used in outdoors where harsh winter conditions were prevailing due to their high water absorption capacity and low durability.

Additionally, it is required to enhance the amount of fiber for increasing the performance of fiber-reinforced materials. Supplementing fibers, on the other hand, increases the materials' viscosity to a great extent, so that a cement-based material with high fiber content becomes difficult in terms of processing and application via conventional methods. In conventional methods, only the short fibers are used at very low proportions.

There are some methods available for processing fibrous materials. One of these is the Hatschek process. In said process, the fibers and a matrix is mixed with water and then the water is removed via a dewatering process. Any materials produced by this method are brittle and are highly susceptible to deformation under external influences. Additionally, they are not convenient for using any kind of fibers.

The patent document with publication number US5108679 relates to the production of fiber-reinforced cement-based materials. According to that document, a fibrous material is fed through an inlet, compressed by means of rollers and turned into flat plates by means of a slipper. That method is also used for non-fibrous cementitous materials, wherein cement, aggregate, and water are mixed, and are then placed onto movable pallets first by means of a roller and then a slipper (US5106557). The patent with publication number US4066723, in turn, proposes a method for producing laminated fibrous concrete, but that method is useful for products only, which have a thickness above a level which could not be considered as thin.

The documents US5891374 and US6528161 disclose the production of fiber-reinforced materials by an extrusion method. This method substantially facilitates the production of products having complex shapes. Producing the panels with a very small thickness below 4 mm, however, requires very high pressures to be applied to the extruder. Furthermore, the outlet of the extruder has a limited width. Therefore, thin materials can only be produced in limited widths.

Having said that, despite the fact that water-retaining additives are added into the mortar in the extrusion technique, such as asbestos, pulp fiber, methyl cellulose, polyoxyalkaline derivatives, copolymer (US2008/0045633 A1, WO2005/123625, WO2007/074924), glass, steel or ceramic, the water in the mixture is decomposed under high pressure, and resultantly, the product cannot be fed out from the outlet of the extruder.

One of the most significant problems in extrusion is form stability. It is particularly difficult to retain the form stability of very thin materials after they are fed out from the outlet. Because of all these reasons, the extrusion method is not suitable for flat, wide and thin panels.

The Reticem and Pultrusion processes, in turn, which serve to perform the production using continues fibers, are other methods employed in producing cement-based fibrous materials. None of these methods, or the systems using these methods, however, is practical or easily-implemented due to the fact that they require continuous fibers and expensive equipment for installation.

One of the previous techniques known to produce cementitous panels via continues production is disclosed in the document with publication number US4504335. According to that document, a homogenous cementitous mixture is flattened by means of a rotating roller on a moving band and meanwhile, a lower and upper reinforcement system is embedded into the surface of the cement-containing mixture. In that method, fiber nets (textile/fabric), are used on the lower and upper surfaces of the panel and the production is realized accordingly. It is not possible to produce these panels with chopped fibers using this method. However, since it is quite hard to produce some fibers particularly such as polyvinyl alcohol (PVA) showing superior performance in concrete in the form of fabric, it becomes an obligation to use PVA and similar fibers in a chopped form when it is desired to use PVA and similar fibers in this type of panels. Similarly, the patent with publication number US7615504 discloses the production technique of fabric-reinforced concrete panels. The lower and upper surfaces of a panel are likewise supported with fabrics in that method. The document with publication number US2002/0182954 similarly discloses a production method comprising the reinforcement of cementitous panels by confining the panels from below and above with a fabric. The document with publication number US2002/0170648 describes cementitous panels of which two opposite sides are covered with different materials. Cementitous panels are similarly confined from below and above with two different materials in that document.

The document with publication number US4666648 may be cited as an example of the prior art for the production of cementitous products, of which the upper and lower surfaces are not confined with any materials. According to that document, concrete is compressed on a moving wheeled segmented system so as to provide a smooth surface and then a product fed out is cut into pieces by means of a lower system. A tile-making machine composed of a band on which the segmented system is placed on the lower band and a system compressing the mortar on the top is another representative system of a conventional production method for unreinforced cementitous products (US5820802).

The document JPH0216005 discloses a system to obtain fiber reinforced cement plates. The system makes use of a series of extrusion dies in order to orient the reinforcing ifbers. The cement plate is then passed through a roller set comprising two pressing rollers.to give said plates their final shape. The document FR1425619 discloses an improved system for the manufacture of flat elements based on clay or mineral compounds. The system comprises rollers containing ridges on their lateral surface so that the flat plate can be delimited or cut depending on the height of the ridges and/or the thickness of the plate. The document JPH0241206 also discloses a system for conveying a pattern onto inorganic uncured plates by patterned rollers. The documents JPH06134724, US5779957 and US4115501 also disclose systems and methods for continuously producing cement panels reinforced with fibers by pressing it between pressure rolls.

In the patent documents with publication numbers US3532576 and US3459620 are described production methods of gypsum boards. These methods similarly require the use of a supportive element for the lower and upper surfaces of a panel, as it was the case of the foregoing cementitous panel production method.

It is stated above that hydroxypropyl methyl cellulose is used in cement-based mixtures according to the prior art. The use of hydroxyethyl cellulose, carboxymethyl hydroxyethyl cellulose, polyethylene oxide, sodium polyacrylate, casein, and some similar water-retaining and thickening agents are further stated. In the patent with publication number US5047086 is mentioned on alkali cellulose and hydroxyalkali cellulose. The document EP0340765, on the other hand, mentions on the use of at least one of hydroxypropyl methyl cellulose, hydroxyethyl methyl cellulose, and hydroxyethyl cellulose.

Very thin cross-sections are typically preferred to reduce the loads on the facades of buildings. Thin panels lower the load to which a building is exposed, and accordingly causes a reduction in the load of a possible earthquake to affect a building. Furthermore, in the materials produced with lower cross-sections, quite economic products are obtained based on the lower raw material amounts used in the production. On the other hand, it is quite difficult to produce this type of thin materials by maintaining size and form stability via conventional methods. Some conventional production techniques do not allow the production of very thin materials, whereas some very thin cementitous materials produced with other production techniques fail in providing the desired properties in terms of form and size stability. It is not possible to use any water retaining materials in some implementations carried out with conventional casting techniques based on the difficulties in terms of application and of providing processability.

When the extrusion method is used, in turn, the pressure to be applied becomes very high when the cross-section size is made too low. Some application-related problems emerge due to friction. It becomes impossible to use fibers with higher aspect ratios particularly in very thin elements. The production is possible only with thin and short fibers.

According to the prior art stated above, there is a need towards a production technique, which provides a continuous, rapid, and economic production of cement-based composites, which have a higher form and thickness stability using lower pressures, are thin and/or wide, and show a high durability, as well as towards mix ratios which , are convenient in terms of this production technique.

### Brief Description of Invention

This invention aims to solve the aforesaid drawbacks under the inspiration of the current state of the art. The primary object of this invention is to provide a method for the rapid production of cement- based fiber reinforced materials in the form of thin panels. This invention aims to produce cementitous panel materials, which are durable against external environment and have adequate strength, in a swift manner without using any molds. Water-retaining agents are used in the technique described herein, these agents enabling the processability of the subject materials by means of the system proposed with this invention, such that cement-based fibrous panels with a desired lower thickness are obtained in continuous production. The desired lower thickness can be adjusted to an accuracy of 0.1 mm with the aid a mechanism provided between rollers. The thickness stability is ensured throughout the entire panel cross-section and the thickness is kept identical over any points. A production resulting in a stable thickness is desired due to the convenience it provides during mounting and the end use of the product.

Despite the fact that a thin panel is obtained, one object thereof is to reduce the evaporation rate of water from the concrete with the water-retaining agent it comprises, which is contrary to the prior art, thereby decreasing shrinkage, and preventing any deformation, which typically occurs in thinner materials due to shrinkage. The formation of discontinuous gaps (entrained air) due to the water-retaining agent present in the material is also an efficient factor in preventing deformations. This cellular structure (entrained air) also increases the frost resistance of the cement-based composite material and increases its freezing-thawing performance as well. This cellular structure also increases the frost resistance of the cement-based composite material and increases its freezing-thawing performance.
It is another object of this invention to obtain an orthotopic material by positioning the fibers in a layer on directions where strength is desired.

This invention also aims to provide an easier use of highly slender fibers and to make usable relatively thicker fibers.

A further object is to increase the tensile strength and fracture energy of a product obtained as compared to known fibrous cement-based materials by increasing the amount of included fiber to an extent, which cannot be achieved by conventional methods. Furthermore, the achievement of a high tensile strength is supported by providing a homogenous distribution of fibers.
It is a further object of this invention to obtain homogeneous properties throughout the products obtained, by preparing the materials used in the production in advance.
Since the system does not contain some prior-art elements like the rollers and slippers at the same time, the production costs are also reduced.
It is another object of this invention to achieve a production in a very large scale on a relatively small plant area by means of a continuous production band, and to provide a very economic production with almost-zero labor thanks to a mass production conducted. This is reflected to the consumer in the form of price advantage.
The fact that a product has the consistency of play dough allows easily shaping the product on a template as desired. Thus, the product can be used as flat panels, or is brought into a desired shape by means of a template and then cured to give a final product.
Structural and characteristic features and all advantages of the present invention shall be made clear by means of enclosed figures described here below and a detailed description written by making references to said figures; therefore, the present invention must be evaluated by taking into consideration said figures and the detailed description.

### Brief Description of Drawings

Figure 1 is a perspective illustration of a preferred system.

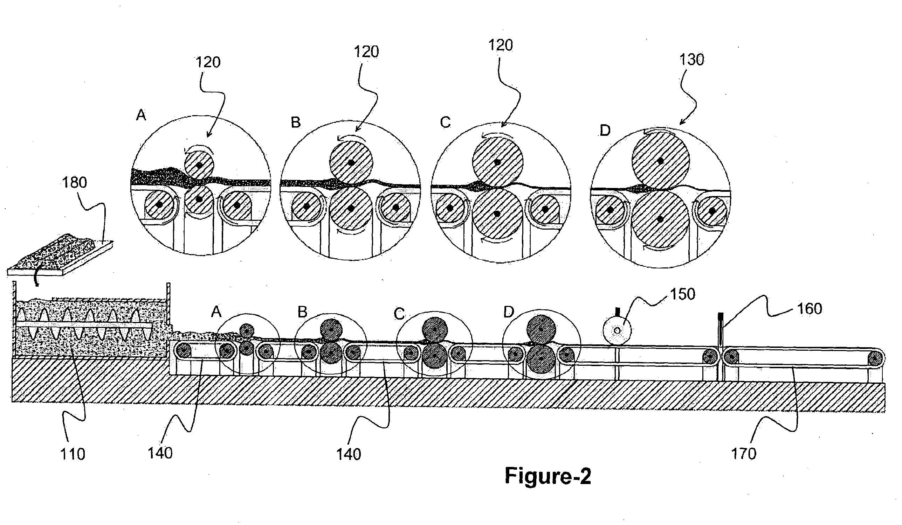

Figure 2 is a side cross-sectional illustration of the preferred system.
Figure 3 is a graph of load-deformation curves of a four-point bending test for samples of Example 2.
Figure 4 is a graph of load-deformation curves of a four-point bending test for a sample of Example 1.
Figure 5 is a graph of stress-deformation curves of a tensile stress test for a sample of Example 1.
Figure 6 is a graph of load-deformation curves of a four-point bending test for a sample of Example 2.
Figure 7 is a graph of load-deformation curves of a four-point bending test for a sample of Example 2.
Figure 8 is a graph of load-deformation curves of a four-point bending test for a sample of Example 2 following a curing period of 30 minutes.
Figure 9 is a graph of load-deformation curves of a four-point bending test for a sample of Example 2 following a curing period of 60 minutes.
Figure 10 is a micrograph image of a polished surface of the panel obtained.
Figure 11 is a micrograph image of the cross-section of the panel in parallel to the outlet direction.
Figure 12 is a microscopic image of the panel dropped to the band following the first rollers.
Figure 13 is detailed view of the same image as Figure 12

The figures are not scaled to actual sizes and some details may be omitted, which are not required to understand the invention. Additionally, the components which are substantially identical or which have functions which are substantially identical are indicated with the same reference numbers.

**Description of Reference Numbers**

| | |
|---|---|
| 110. Feeding unit | 150. Width sizing unit |
| 120. Compressive roller set | 160. Length sizing unit |
| 130. Final roller set | 170. Curing band |
| 140. Support band | 180. Pouring band |

### Detailed Description of Invention

This invention provides a method in accordance with claim 1 for obtaining a cement-based panel material comprising cement and water, which has a durability and such a low thickness that were not feasible according to the prior art.

### Preferred embodiment of this invention:

In the following detailed description, preferred embodiments of the method according to the present invention shall be described illustratively only to make clear the present invention without imposing any restrictions thereon.
The basic formulation of the material used in the system and method according to the present invention comprises 200-1200 kg cement and 200-800 kg water per 1 m<3> material. It is also preferred to use 1-200 kg of fiber in the material.
The cement used in this invention is hydraulic cement, but it is possible to use other cements like ASTM Type 1 , Type 2, Type 3, and Type 4 known in the relevant art as well. The 28-day standard strength of the cement used in the mixture may vary between 32.5 - 72.5 N/mm². The amount of water used has to be an amount which would sufficient for the hydration of the cement. It also has to be kept in minimum to avoid any decrease or loss in the strength and durability of the products. The type and performance of the chemical additive in the mixture is important with respect to the fresh performance of a product obtained and in terms of guaranteeing its form stability. The additive has to have features to contribute to the thixotropic property of a product obtained. The chemical additive must also allow producing the product with lower amounts of water to render it more durable against outdoor conditions. Super plasticizer additives are used for this purpose. The proportion of plasticizer used varies between 0.1 to 7% of the weight of cement. The additives used may be lignin-, melamine-, naphthalene-, polycarboxylate-based.
It is also possible to use mineral additives with cement in the mixture to increase the durability of the product, lower down the hydratation heat and shrinkage, and to obtain a more environmentally-friendly product. These mineral additives may be natural pozzolans (volcanic tuffs, volcanic glasses, etc.), and synthetic pozzolans (fly ash, blast furnace slag, silica fume). The amount of additive used is preferably 1-800 kg per 1 m³ material.
These mineral additives are preferably a material selected from the group comprising synthetic pozzolans and natural pozzolans such as fly ash, blast furnace slag, and silica fume, or a proper combination thereof.

Aggregate is also used in the mixture. These aggregates are in a size of 0.05 mm to 2 mm. These sizes can be used in the production of panels with a thickness of 2-4 mm. When it is desired to produce panels with a higher thickness, the size of aggregates may be increased up to 10 mm. The aggregates may be natural aggregates with a normal weight and natural lightweight and synthetic aggregates. Natural aggregates with normal weight may be produced from quartz, silica, dolomite, limestone, sandstone, basalt, granite. Natural and synthetic lightweight aggregates, in turn, are other synthetic lightweight aggregates such as pumice, expended clay, perlite, expended perlite, extruded polystyrene (XPS), expanded polystyrene (EPS), glass foam, etc.. The most preferred agent is quartz powder. This powder can also be named as quartz sand in the relevant art.

With these agents added, it is aimed to prevent any shrinkage and related problems possibly to occur due to the cement amount. In order to obtain better results, it may be preferred to substitute some amount of cement with fly ash and blast furnace slag. Quartz sand with particles approximately corresponding to the size of cement particles is used to prevent any deterioration in the form stability of products during wetting and drying cycles by minimizing the shrinkage of products obtained.

The fibers used in the materials according to the present invention are preferably synthetic fibers, but it may be natural fiber as well. Therefore, a fiber selected from the group comprising polypropylene (PP), glass, polyvinyl alcohol (PVA), Kevlar, polyethylene (PE), nylon, cotton, wood fiber, or a proper combination thereof. The length of fiber preferred according to this invention is 0.5 mm to 50 mm. In terms of synthetic and glass fibers, the fibers to be used in the mixture may vary from 0.01 % to 10% of the total weight. This proportion may vary from 0.01% to 50% of the total weight for steel fibrous products.

It is also possible to use sand in the material according to the present invention. The sand to be preferred should not contain grains with a size exceeding 1 mm.

In addition to the ingredients referred to above, at least consistency-regulating and water-retaining additives are used to increase the thixotropy of the mixture. The consistency-regulating and water-retaining agents are selected from the group comprising hydroxypropyl methyl cellulose and methylcellulose, or a proper combination thereof. Alternatively, hydroxyethyl cellulose, carboxymethyl hydroxyethyl cellulose, polyethylene oxide, sodium polyacrylate, casein, alkali cellulose, hydroxyalkali cellulose, hydroxypropyl methyl cellulose, hydroxyethyl methyl cellulose, and hydrotoxyethyl ethyl cellulose can be used for this purpose. The proportion of these materials to the total mass in the mixture may vary 0.1 % to 4%.

It is also possible to use air-entraining additives in the present invention to enhance the freezing thawing performance. The proportion of air-entraining additives varies 0.1 to 7% of the weight of cement.

Some nano materials, which have become widely used in the production of cement-based materials, are also used to increase the product performance. These are nano Si02 and nano Ti02. The proportion of nano substances in the mixture may vary 0.5 to 7.5%.

The following representative formulations can be presented for the mixture according to the present invention:

### Example 1:

| **Ingredients** | **Amount (kg/m³)** |
|---|---|
| cement (CEM1 42,5) | 400-1200 |
| water | 200-500 |
| sand | 400-1200 |
| naphthalene-based plasticizer | 0.1-15 |
| consistency-regulator (hydroxypropyl methyl cellulose) | 0.1-15 |
| synthetic fiber (PP) | 1-200 |

### Example 2:

| **Ingredients** | **Amount (kg/m³)** |
|---|---|
| cement (CEM1 42,5) | 400-1200 |
| water | 200-500 |
| sand | 400-1200 |
| naphthalene-based plasticizer | 0.1-15 |
| consistency-regulator (hydroxypropyl methyl cellulose) | 0.1-15 |
| synthetic fiber (PVA) | 1-200 |

### Example 3:

| **Ingredients** | **Amount (kg/m³)** |
|---|---|
| cement (CEM1 42,5) | 200-1000 |
| mineral additive (fly ash) | 200-800 |
| water | 200-500 |
| sand | 400-1200 |
| naphthalene-based plasticizer | 0.1-15 |
| consistency-regulator (hydroxypropyl methyl cellulose) | 0.1-15 |
| synthetic fiber (PP) | 1-200 |

### Example 4:

| **Ingredients** | **Amount (kg/m³)** |
|---|---|
| cement (CEM1 42,5) | 200-1000 |
| mineral additive (blast furnace slag) | 200-800 |
| water | 200-500 |
| sand | 400-1200 |
| naphthalene-based plasticizer | 0.1-15 |
| consistency-regulator (hydroxypropyl methyl cellulose) | 0.1-15 |
| synthetic fiber (PP) | 1-200 |

### Example 5:

| **Ingredients** | **Amount (kg/m³)** |
|---|---|
| cement (CEM1 42,5) | 200-1000 |
| mineral additive (fly ash) | 200-800 |
| mineral additive (silica fume) | 1-100 |
| water | 200-500 |
| sand | 400-1200 |
| naphthalene-based plasticizer | 0.1-15 |
| consistency-regulator (hydroxypropyl methyl cellulose) | 0.1-15 |
| synthetic fiber (PP) | 1-200 |

### Example 6:

| **Ingredients** | **Amount (kg/m³)** |
|---|---|
| cement (CEM1 42,5) | 200-1000 |
| mineral additive (fly ash) | 200-800 |
| mineral additive (silica fume) | 1-100 |
| water | 200-500 |
| sand | 400-1200 |
| naphthalene-based plasticizer | 0.1-15 |
| consistency-regulator (hydroxypropyl methyl cellulose) | 0.1-15 |
| synthetic fiber (PP) | 1-200 |

### Example 7:

| **Ingredients** | **Amount (kg/m³)** |
|---|---|
| cement (CEM1 42,5) | 200-1000 |
| mineral additive (silica fume) | 1-100 |
| water | 200-500 |
| sand | 400-1200 |
| naphthalene-based plasticizer | 0.1-15 |
| consistency-regulator (hydroxypropyl methyl cellulose) | 0.1-15 |
| synthetic fiber (PP) | 1-200 |

The performance ranges obtained for the examples given above and proving the form stability and high strength and durability are as follows.

| **Example** # | **Flexural strength (MPa)** | **Tensile strength (MPa)** | **Fracture energy (J/m²)** | **Water Absorption (%)** |
|---|---|---|---|---|
| 1 | 3-20 | 1-6 | 50-1500 | 1-10 |
| 2 | 3-25 | 1-9 | 50-2000 | 1-10 |
| 3 | 3-20 | 1-6 | 50-1500 | 1-10 |
| 4 | 3-20 | 1-6 | 50-1500 | 1-10 |
| 5 | 3-25 | 1-7 | 50-1600 | 1-10 |
| 6 | 3-25 | 1-7 | 50-1600 | 1-10 |
| 7 | 3-25 | 1-7 | 50-1600 | 1-10 |

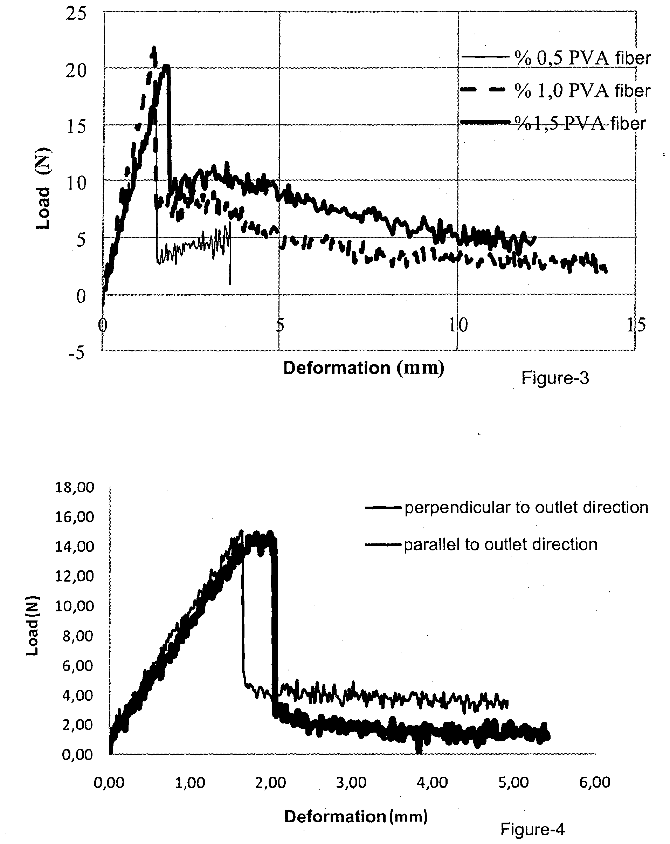

Figure 3 provides load-deformation curves of a four-point bending test for 2.5x50 mm samples of Example 2 with varying PVA fiber contents following a curing period of 7 days under air. It is possible to produce composites with different mechanical properties by changing the PVA fiber content in the mixture. Here, changing the PVA fiber content considerably alters the load borne by composites with a thickness of 3 mm and a width of 50 mm. However, no considerable differences occur in terms of strength. When the areas under curves are compared, however, it can be seen that significant differences emerge among the fracture energies of the composites.

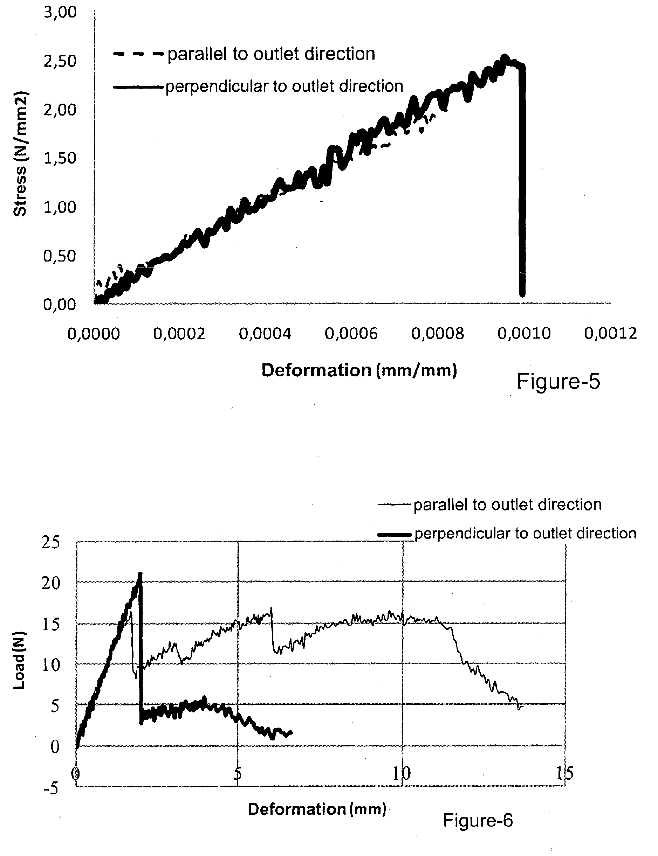

Figure 4 provides load-deformation curves of a four-point bending test for a 2.5x50 mm sample of Example 1 comprising PP fibers following a curing period of 7 days under air. Similarly, Figure 5 provides stress-deformation curves of a tensile stress test for a 2.5x50 mm sample of Example 1 comprising PP fibers following a curing period of 7 days under air.

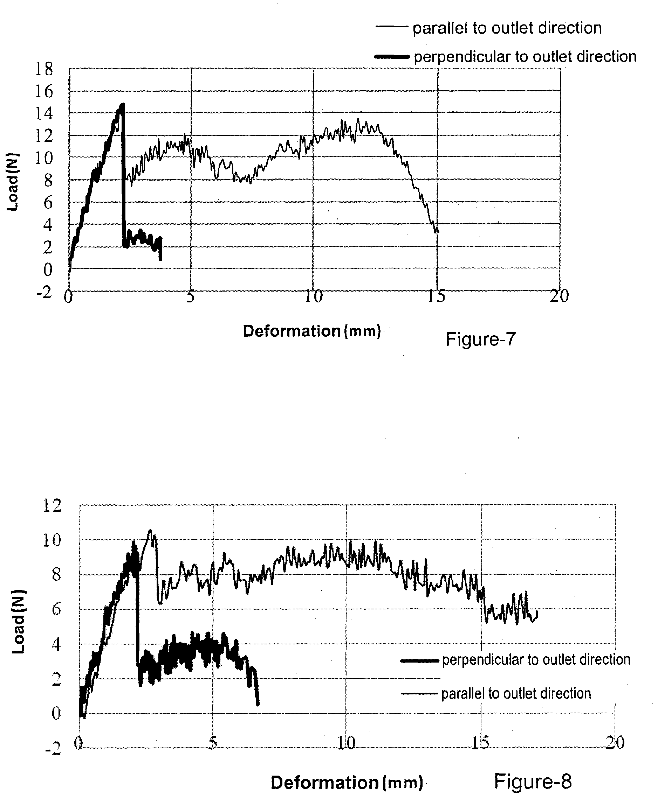

Figure 6 provides load-deformation curves of a four-point bending test for a 2.5x50 mm sample of Example 2 comprising PVA fibers following a curing period of 4 days in water. Figure 7, in turn, provides load-deformation curves of a four-point bending test for a 2.5x50 mm sample of Example 2 comprising PP fibers following a curing period of 4 days under air.

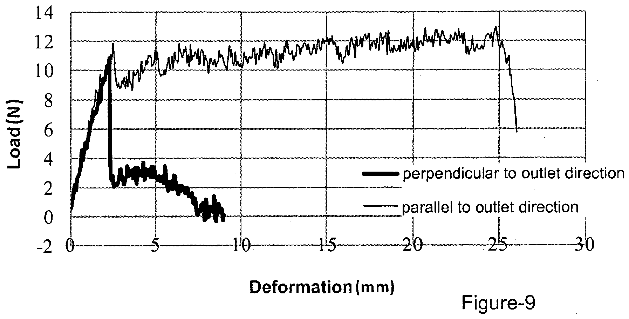

Figure 8, provides load-deformation curves of a four-point bending test for a 2.5x50 mm sample of Example 2 comprising PVA fibers following a curing period of 30 minutes in a hot-air tunnel at 65°C and 4 days under air. The load-deformation curves for the same sample following a curing period of 60 minutes are shown in Figure 9.

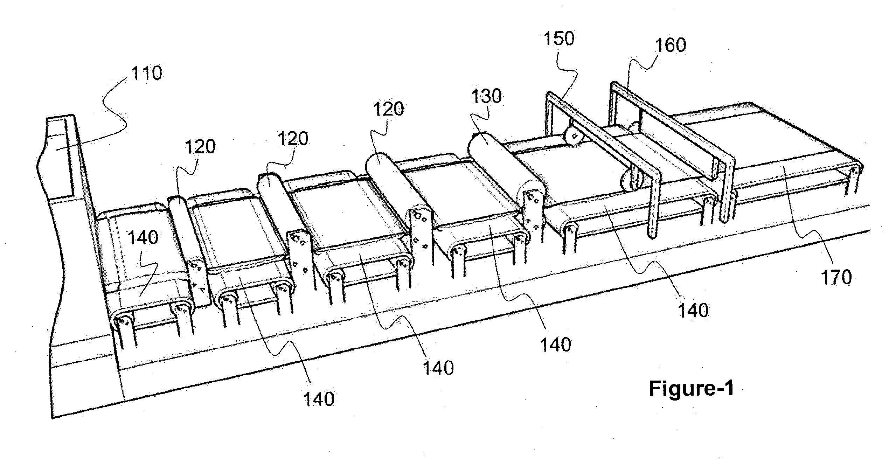

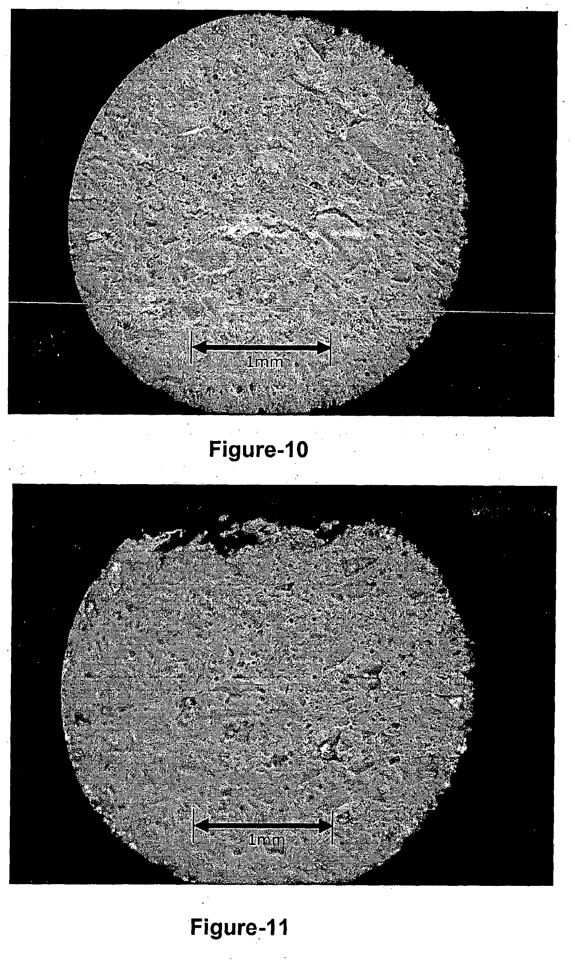

While no differences are observed in the material properties of the samples comprising PP fibers (Example 1) according to the direction these samples are outlet from the machine, the mechanical properties of the samples comprising PVA fibers (Example 2) do vary towards the outlet direction of the machine. Despite the fact that there was no significant difference between the flexural strength of the samples taken out in parallel to the outlet direction of machine and of the samples taken out perpendicularly to the outlet direction of machine, considerable differences have been determined in terms of the rupture energy Figure 10 gives a micrograph image of a polished surface of the panel obtained. Figure 1 1 , in turn, gives a micrograph image of the cross-section of the panel in parallel to the outlet direction.

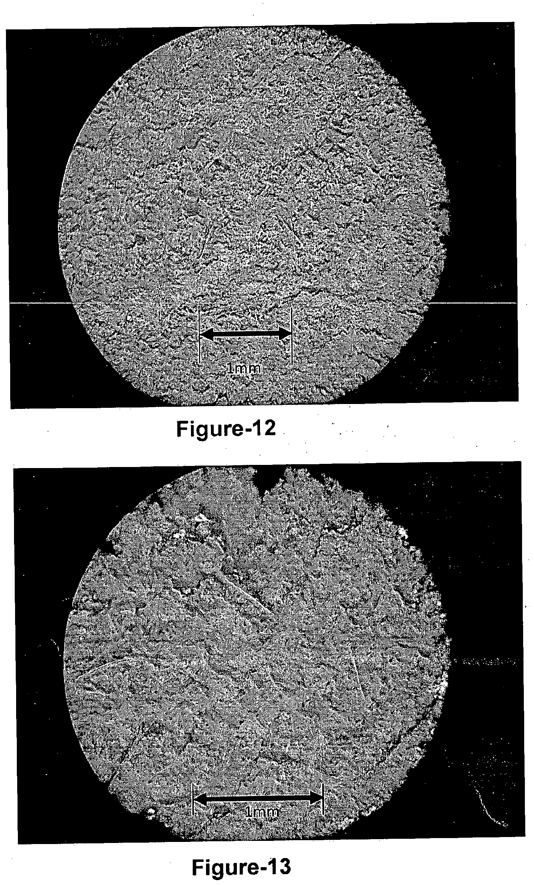

The difference of the method according to the present invention to the roller and slipper method is that the material is not moved on pallets at the bottom. The material is first passed through pre-compressive rollers (120), which have a diameter lower than that of the final rollers (130). The material is guided then in between the larger rollers. The material is not placed on any pallet as it is present between the roller sets (120, 130). It is not flattened by means of a slipper either. The material is flattened by using the surfaces of the rollers and is passed from one roller to the other in continues manner. A band or bands disposed below the material and between the rollers is/are used only for supporting the material from below. In the method first the dry substances except the fibers are weighed according to a proper recipe and poured into a mix. The dry mix is mixed in the mixer. Then, some amount of the water (preferably half of the total amount) to be introduced into the mix is added to moisten the mix and to prevent the absorption of the additives by the aggregate and cement and is mixed for 3-5 minutes. If micro and nano materials are to be used, they are weighed at proper amounts and slurry is prepared, thereafter some portion of this material is introduced into the solid mix. Meanwhile, the plasticizer, liquid materials, and other chemical additives, as well as the remaining portion of water are mixed in a dosing unit and then poured into the mixer. Finally, the slurry obtained from the micro and nano materials and the fibers are added into the mix, mixed for 3-5 minutes, and then transferred to a pouring band (180). The material is dropped from the pouring band to a feeding unit (110). The material is squeezed in the feeding unit by means of an auger and is fed from the outlet of the feeding unit onto a first band (140) at uniform amounts. The first band delivers the fibrous paste to the inlet of the first roller set (120) and the rollers compress the paste into a first thickness of 3.5 mm. Figure 12 gives a microscopic image of the panel dropped to the band following the first rollers. Figure 13, in turn, provides a detailed view of the same image. The material brought to its first thickness is passed to a second band (1 0) and the second band transfers the material to a second roller set (120). The thickness of the material is further decreased in the second roller set (120) to 1-3 cm. The thinned material is outlet from the rollers, is passed to a third band (140), and the third band (140) transfers the material to a third roller set (20). The thickness of the material is further reduced in the third set (120) to 0.6-1 cm. This material is passed to a fourth band (140) at the outlet of the rollers (120), and the fourth band (140) transfers the material to a fourth roller set (120). The forth set (120) gives the final thickness of the material (0.2-0.4 cm). The form of the edges of the material is yet improper and it has not a stable width. In order to correct this, a fifth band (140) brings the material below a width sizing unit (50) for dimensioning the width of the material and its width is sized preferably by means of a saw. Then the material is brought below a length sizing unit (160) which dimensions the length of the material. The length of the material is cut by means of a guillotine in the unit (160).
The output product is taken to a curing band (170). Different methods are used for curing the material in order to provide strength. The material can be cured under air, in water, steam, a hot tunnel or in an autoclave. It is also possible to cure the material by applying a curing material into or over the material.
Some amount of fiber is spread between freshly-prepared plates which were flattened in different rollers, and then the plates are combined and passed back between the rollers. Thus, the fibers are embedded into the matrix. This process is repeated many times so that the fibers are embedded into the matrix in an amount that was not possible to embed into the matrix according to the prior art. Additionally, there is no limit in the length of fibers to be embedded into the matrix in this way. If desired, the fibers can also be applied like a yarn in continues form without being cut. Thus, the fibers are oriented as desired and the property of the material can be adjusted according to this orientation. Hence, a material can be produced which has desired mechanical properties on desired directions.
A powder or liquid paint of various colors can be applied onto the material before it is passed through the final rollers during production and a decorative appearance is created on the product.
By annexing an additional unit or apparatus to the system, the panel is dropped on a male or female mold and turned into a box shape using a very low pressure. It can also be produced in L or U shapes. It can be produced in a trapezium form as well. The panel is folded after it leaves the sizing process, and it can thus be shaped without using any molds. It may be dropped on a mass having a desired shape and be shaped using a very low pressure.
A desired pattern can be formed on the surface of the final roller, such that products with desired surfaces and even with trapezium cross-sections can be obtained.
If desired, a single unit can be used to obtain a product with desired sizes, in place of using the width and length sizing units (150, 160) separately. It is also possible to produce panels with a thickness up to 10 cm by setting up the system accordingly. If thin products are to be obtained, the number of the roller sets can be increased according to the lower thickness to be produced. One of the superiorities of this method is that it allows obtaining an orthotopic material by orienting the fibers in the layer on the outlet direction. Since the fibers are oriented on the direction on which they have to bear the tensile stress (the direction on which the panels are outlet and/or the direction perpendicular to this outlet direction) in the productions made with the method according to this invention, it becomes possible to obtain higher performances using lower amounts of fiber and to obtain more economic and more processable products.
The method according to the present invention allows producing floor coverings, covering panels, ceiling coverings, tiles, roof coverings, partition panels, or protective layers. The features of the products obtained may be listed as follows:
- improved strength,
- improved durability,
- uniform distribution of fibers due to the mix technique,
- increased tensile strength as compared to the products free of fibers,
- increased strength as compared to the products produced via the Hatschek method,
   - strain hardening property,
- lack of formation of laminated layers in the product,
- possibility to use higher proportions of fiber, and
- elimination of the high pressure and energy requirement for shaping the products by means of rollers.

## Claims

1. A method for obtaining cement-based panel comprising cement and water, **characterized by** comprising the steps of;
determining material formulation according to the intended use and the desired mechanical properties of panel to be produced, in which dry materials are weighed, the dry materials are mixed in a mixer, some amount of water is added into the dry mix, additives and liquid materials are mixed with the remaining amount of water in a separate tank, this liquid mix is added into and mixed with the solid mix, and fibers are introduced into the final mix for preparing said material,
preparing the material mix,
obtaining a thin panel by passing the material of the cement-based panel through between at least one compressive roller set (120) comprising at least two rollers,
transferring said thin panel to at least one final roller set (130), comprising at least two rollers, without using any pallet, and is passed through said final roller set (130),
spreading fibers between freshly prepared panels flattened through different rollers and laying said panels in a superimposed manner and passing said panels through said roller set (120) again at least once, so that the fibers are embedded into the matrix/material in the desired direction.

## Patentansprüche

1. Eine Methode zur Herstellung einer Zement-basierten Platte bestehend aus Zement und Wasser, **gekennzeichnet durch** folgende beinhaltende Schritte;
- Bestimmung der Material Rezeptierung gemäß der angestrebten Verwendung und der gewünschten mechanischen Eigenschaften der herzustellenden Platte, in der trockene Materialien gewogen werden, die trockenen Materialien werden in einem Mixer gemischt, eine bestimmte Menge an Wasser wird zum trockenen Gemisch hinzugefügt, Zusatzstoffe und die flüssigen Materialien werden mit der verbleibenden Menge Wasser in einem separaten Tank gemischt, flüssige Gemisch wird hinzugefügt und mit dem festen Gemisch zusammen gemixt, und die Fasern werden in die Endmischung zur Herstellung des besagten Materials eingeführt,
- Vorbereitung der Materialmischung,
- Erhalten einer dünnen Platte, indem das Material der zementbasierten Platte zwischen mindestens einem Druckwalzen-Set (120), das mindestens aus zwei Walzen besteht, geleitet wird,
- Übertragen der besagten dünnen Platte nach mindestens ein Endwalzen-Set (130), welches aus mindestens zwei Walzen besteht, ohne Paletten zu benutzen, dann durch besagtes Endwalzen-Set (130) leiten,
- Verteilung der Fasern zwischen den frisch Zubereiteten Platten, welche vorher durch verschiedene Walzen abgeflacht sind und Verlegung der besagten Platten in einer Überlagerten Weise und anschließende letzte Leitung der Platten durch das Walzen-Set (120), damit die Fasern in das Matrix/Material in die gewünschte Richtung eingebettet werden.

## Revendications

1. Un procédé permettant d'obtenir un panneau à base de ciment comprenant du ciment et de l'eau et consistant à:
- déterminer la formulation du matériau selon l'utilisation prévue et des propriétés mécaniques du panneau souhaitées à obtenir, qui comprend le pesage des matériaux secs, leur mélange dans un mélangeur, l'ajout d'une certaine quantité d'eau dans le mélange sec, le mélange des additifs et des matériaux avec la quantité d'eau restante dans un réservoir séparé, l'ajout dudit mélange liquide dans le mélange solide et mélangé avec celui-ci, et l'introduction des fibres dans le mélange final pour préparer ledit matériau,
- préparer le mélange de matériaux,
- obtenir un panneau mince en faisant passer le matériau du panneau à base de ciment entre au moins un ensemble de rouleaux à compression (120) avec au moins deux rouleaux,
- transférer ledit panneau mince à au moins un ensemble de rouleaux final (130) avec au moins deux rouleaux, sans utiliser de palette, et le passer à travers ledit ensemble de rouleaux final (130),
- étaler les fibres entre les panneaux fraîchement préparés aplaties à travers différents rouleaux, poser lesdits panneaux de manière superposée et les faire passer à travers ledit ensemble de rouleaux (120) à nouveau au moins une fois, de sorte que les fibres sont intégrées dans la matrice/matériau dans la direction souhaitée.
